# EUROPEAN PATENT APPLICATION

(11) **EP 3 869 764 A1**
(43) Date of publication of application: **25.08.2021**
(21) Application number: 20829170.8
(22) Date of filing: 17.07.2020
(51) Int. Cl.: H04L 29/06, H04N 21/443, H04M 1/725

(54) **MONITORING SYSTEM FOR SMART TELEVISION**

(30) Priority: 23.07.2019 CN 201910667596
(71) Applicant: Amlogic (Shenzhen), Ltd., Shenzhen, Guangdong 518000 (CN)
(72) Inventor: YU, Wei, Shenzhen, Guangdong 518000 (CN)
(74) Representative: LLR
(86) International application number: PCT/CN2020/102527
(87) International publication number: WO 2021/013054

(57) **Abstract**

The present invention provides a smart TV monitoring system, which includes a mobile phone terminal, a server, and a TV terminal. The mobile phone terminal communicates with the server through a TCP/IP protocol, and the TV terminal communicates with the server through the TCP/IP protocol. All operations performed by the mobile phone terminal to the TV terminal are completed in such a way that the server sends a network request to the TV terminal. The TV terminal is provided with a background monitoring service that is responsible for processing the network request from the server. When the TV terminal is turned on, the background monitoring service is initiated and kept running in background. The TV terminal provides a two-dimensional code or a digital code, and the mobile phone terminal is bound to the TV terminal through the two-dimensional code or the digital code. The TV terminal can only be operated through the mobile phone terminal when the mobile phone terminal is bound to the TV terminal, which makes it convenient for parents to monitor the smart TV when they are out.

## Description

### TECHNICAL FIELD

The present invention relates to the field of smart TVs, and in particular to a smart TV monitoring system.

### BACKGROUND

In contemporary society, the problem of underage children indulging in watching TV or watching some television (TV) content that is not suitable for physical and mental growth has become more and more serious, and many parents are suffering from this problem. Scientific research has shown that the indulgence in watching TV may not only directly affect visions of the teenagers and children but also greatly damage their imagination, self-control and the like. The best method to solve this problem is that the parents supervise TV watching of the children by themselves. However, this method is difficult to implement, especially during winter and summer vacations in which because the children are at home most of the time, the supervision is difficult to achieve if parents go out to work.

### SUMMARY

In order to solve the aforesaid problem, the present invention provides a smart TV monitoring system.

The present invention is implemented by the following technical solutions.

The present invention provides a smart TV monitoring system, including: a mobile phone terminal, a server, and a TV terminal, wherein the mobile phone terminal communicates with the server through a TCP/IP protocol; the TV terminal communicates with the server through the TCP/IP protocol; all operations performed by the mobile phone terminal to the TV terminal are completed in such a way that the server sends a network request to the TV terminal; the TV terminal is provided with a background monitoring service that is responsible for processing the network request from the server; when the TV terminal is turned on, the background monitoring service is initiated and kept running in background, and starts to record the total running time of the TV terminal; the TV terminal provides a two-dimensional code or digital code, and the mobile phone terminal is bound to the TV terminal through the two-dimensional code or the digital code; and the TV terminal can only be operated through the mobile phone terminal when the mobile phone terminal is bound to the TV terminal.

Furthermore, a startup password can be set for the TV terminal, and when the startup password is set, the background monitoring service sends a verification code to the mobile phone terminal and the startup password is activated after the verification code is entered on the TV terminal.

Furthermore, the background monitoring service can record data of applications running in a foreground of the TV terminal, and the data includes names of the applications and running times of the applications in the foreground.

Furthermore, the background monitoring service can record duration and a video interface of a video played by the TV terminal through an ATV/DTV/AV/HDMI video interface.

Furthermore, the TV terminal can take a screenshot, and after taking the screenshot, the TV terminal packages the screenshot into picture data in a bmp/jpeg/png format, and then sends the picture data to the mobile phone terminal through the background monitoring service.

Furthermore, the TV terminal can record the screen, and the TV terminal packages osd+video data into a TS stream, and directly transmits the TS stream to the mobile phone terminal by communicating with the mobile phone terminal through a UDP protocol.

Furthermore, the background monitoring service can draw a full-screen warning prompt box in the foreground of the TV terminal according to the network request from the server, and content input by the mobile phone terminal is displayed in the warning prompt box.

Furthermore, the background monitoring service can restrict startup of a certain application in the TV terminal according to the network request from the server.

Furthermore, the background monitoring service can draw a locking box in the foreground of the TV terminal according to the network request from the server and send an unlocking password to the mobile phone terminal, so that the background monitoring service intercepts all button actions except for a power button on the TV terminal before the unlocking password is entered correctly.

Furthermore, the background monitoring service can directly shut down the TV terminal or set a shutdown timer according to the network request from the server, and the TV terminal is shut down when the shutdown timer counts to a preset value.

The present invention has following advantageous effect.

By applying the smart TV monitoring system according to the present invention, the remote control of the TV terminal can be realized by the mobile phone terminal, which makes it convenient for parents to monitor the smart TV when they are out, thereby creating a better growth environment for children.

### BRIEF DESCRIPTION OF THE DRAWINGS

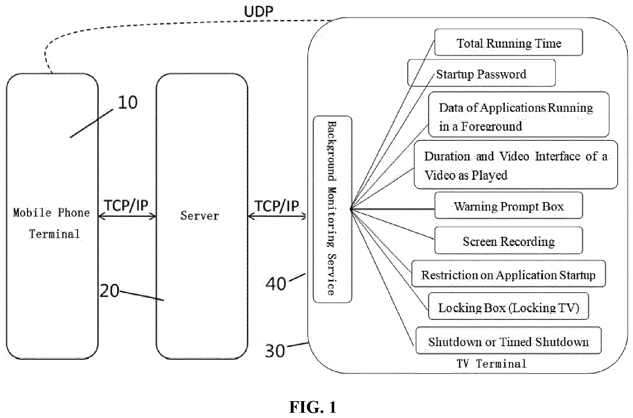

FIG. 1 is a schematic diagram showing a principle of a smart TV monitoring system according to the present invention.

### DETAILED DESCRIPTION

In order to describe the technical solution of the present invention more clearly and completely, the present invention will be further described below with reference to the accompanying drawing.

Referring to FIG. 1, the present invention provides a smart TV monitoring system. The smart TV monitoring system includes a mobile phone terminal 10, a server 20, and a TV terminal 30. The mobile phone terminal 10 communicates with the server 20 through a TCP/IP protocol, and the TV terminal 30 communicates with the server 20 through the TCP/IP protocol. All operations performed by the mobile phone terminal 10 to the TV terminal 30 are completed in such a way that the server 20 sends a network request to the TV terminal 30. The TV terminal 30 is provided with a background monitoring service 40 that is responsible for processing the network request from the server 20. When the TV terminal 30 is turned on, the background monitoring service 40 is initiated and kept running in background, and starts to record the total running time of the TV terminal 30. The TV terminal 30 provides a two-dimensional code or a digital code, and the mobile phone terminal 10 is bound to the TV terminal 30 through the two-dimensional code or the digital code. The TV terminal 30 can only be operated through the mobile phone terminal 10 when the mobile phone terminal 10 is bound to the TV terminal 30.

In this embodiment, the background monitoring service 40 is initiated and kept running in the background, and will not be killed by other applications in the TV terminal 30. When the TV terminal 30 accesses the Internet, the TV terminal 30 communicates with the server 20 through the TCP/IP protocol. At this point, the TV terminal 30 receives the two-dimensional code or digital code sent from the server 20, through a setting application, and the mobile phone 10 is bound to the TV terminal 30 by scanning the two-dimensional code or entering the digital code through an APP, so that the mobile phone terminal 10 communicates with the server 20 through the TCP/IP protocol at this point. After the mobile phone terminal 10 is bound to the TV terminal 30, the TV terminal 30 is controlled by sending a network request to the TV terminal 30 through the APP of the mobile phone terminal 10. In this way, the smart TV monitoring system can realize remote control of the TV terminal 30 by the mobile phone terminal 10, which makes it convenient for parents to monitor the smart TV when they are out, thereby creating a better growth environment for children. After the TV terminal 30 is turned on, the background monitoring service 40 starts to record the total running time of the TV terminal 30. When a total running time-querying network request is sent to the TV terminal 30 through the APP of the mobile phone terminal 10, the total running time querying network request is sent to the background monitoring service 40 through the server 20, and then the background monitoring service 40 sends the total running time to the mobile phone terminal 10 through the server 20, so that the total running time is displayed in the APP of the mobile phone terminal 10.

Furthermore, a startup password can be set for the TV terminal 30, and when the startup password is set, the background monitoring service 40 sends a verification code to the mobile phone terminal 10 when the startup password is set and the startup password is activated after the verification code is entered on the TV terminal 30.

In this embodiment, after the mobile phone terminal 10 is bound to the TV terminal 30, the background monitoring service 40 sends a verification code to the mobile phone terminal 10 when a startup password needs to be set for the TV terminal 30, and the startup password is activated after the verification code that is displayed in the APP of the mobile phone terminal 10 is entered on the TV terminal 30. When the startup password is cancelled, the background monitoring service 40 sends a verification code to the mobile phone terminal 10, and the startup password is cancelled after the verification code that is displayed in the APP of the mobile phone terminal 10 is entered on the TV terminal 30.

Furthermore, the background monitoring service 40 can record data of applications running in a foreground of the TV terminal 30, and the data includes names of the applications and running times of the applications in the foreground.

In this embodiment, by taking an Android smart TV as an example, in order to enable the background monitoring service 40 to record data of applications running in the foreground of the TV terminal 30, the code of the framework needs to be modified. Thus, variables are added to an ActivityManager to enable the background monitoring service 40 to record data of applications running in the foreground of the TV terminal 30. The background monitoring service 40 can also send the data to the mobile phone terminal 10 through the server 20.

Furthermore, the background monitoring service 40 can record duration and a video interface of a video played by the TV terminal 30 through an ATV/DTV/AV/HDMI video interface.

In this embodiment, even if the TV terminal 30 does not play the video through the application in the TV terminal 30, the background monitoring service 40 can still record the duration and the video interface of the video played by the TV terminal 30 through the ATV/DTV/AV/HDMI video interface. In addition, the background monitoring service 40 can send the data to the mobile phone terminal 10 through the server 20.

Furthermore, the TV terminal 30 can take a screenshot, and after taking the screenshot, the TV terminal 30 packages the screenshot into picture data in a bmp/jpeg/png format, and then sends the picture data to the mobile phone terminal 10 through the background monitoring service 40.

In this embodiment, when a screenshot-taking network request is sent to the TV terminal 30 through the APP of the mobile phone terminal 10, the TV terminal 30 takes the screenshot and packages the screenshot into picture data in the bmp/jpeg/png format. Then, the background monitoring service 40 sends the picture data to the APP of the mobile phone terminal 10 through the server 20.

Furthermore, the TV terminal 30 can record the screen, and the TV terminal 30 packages osd+video data into a TS stream, and directly transmits the TS stream to the mobile phone terminal 10 by communicating with the mobile phone terminal 10 through a UDP protocol.

In this embodiment, when a screen-recording network request is sent to the TV terminal 30 through the APP of the mobile phone terminal 10, the TV terminal 30 communicates with the mobile phone terminal 10 through the UDP protocol, and packages the osd+video data into a TS stream. Then, the background monitoring service 40 directly sends the TS stream to the APP of the mobile phone terminal 10 through the UDP protocol communication. In addition, the background monitoring service 40 can follow network conditions of the mobile phone terminal 10 and the TV terminal 30 to adjust the resolution of the TS stream, and thus the TS stream can switch among several different resolutions of 480P/720P/1080P.

Furthermore, the background monitoring service 40 can draw a full-screen warning prompt box in the foreground of the TV terminal 30 according to the network request from the server 20, and content input by the mobile phone terminal 10 is displayed in the warning prompt box.

In this embodiment, when a warning prompt box network request is sent to the TV terminal 30 through the APP of the mobile phone terminal 10, a user can edit the content displayed in the warning prompt box through the APP of the mobile phone terminal.

Furthermore, the background monitoring service 40 can restrict startup of a certain application in the TV terminal 30 according to the network request from the server 20.

In this embodiment, by taking the Android smart TV as an example, in android software, the code of the framework is modified and restrictions on startup of the application are added in the ActivityManager. When the background monitoring service 40 receives an application locking network request sent by the server 20, the background monitoring service 40 will update an application blacklist maintained in the ActivityMananger, and the application in the blacklist cannot be started up on the TV by clicking the application icon.

Furthermore, the background monitoring service 40 can draw a locking box in the foreground of the TV terminal 30 according to the network request from the server 20 and send an unlocking password to the mobile phone terminal 10, so that the background monitoring service 40 intercepts all button actions except for the power button of the TV terminal 30 before the unlocking password is entered correctly.

In this embodiment, after the background monitoring service 40 draws a locking box in the foreground of the TV terminal 30 according to the network request of the server 20, even if the TV terminal 30 is restarted through the power button, the background monitoring service 40 may still restore the locking box after the restart until the user enters the correct unlocking password in the locking box.

Furthermore, the background monitoring service 40 can directly shut down the TV terminal 30 or set a shutdown timer according to the network request from the server 20, and the TV terminal 30 is shut down when the shutdown timer counts to a preset value.

In this embodiment, when a direct shutdown network request is sent to the TV terminal 30 through the APP of the mobile phone terminal 10, the background monitoring service 40 directly shuts down the TV terminal 30 according to the network request from the server 20. By taking an Android smart TV as an example, when the background monitoring service 40 receives a direct shutdown or timed shutdown network request from the server 20, the background monitoring service 40 directly calls shutdown of Powermanager to directly shut down the TV or uses a handler as a shutdown timer to realize the timed shutdown.

Of course, the present invention may further have many other embodiments. Based on this embodiment, other embodiments obtained by a person of ordinary skills in the art without any creative work fall within the protection scope of the present invention.

## Claims

1. A smart TV monitoring system, comprising: a mobile phone terminal, a server, and a TV terminal, wherein the mobile phone terminal communicates with the server through a TCP/IP protocol; the TV terminal communicates with the server through the TCP/IP protocol; all operations performed by the mobile phone terminal to the TV terminal are completed in such a way that the server sends a network request to the TV terminal; the TV terminal is provided with a background monitoring service that is responsible for processing the network request from the server; when the TV terminal is turned on, the background monitoring service is initiated and kept running in background, and starts to record total running time of the TV terminal; the TV terminal provides a two-dimensional code or a digital code, and the mobile phone terminal is bound to the TV terminal through the two-dimensional code or the digital code; and the TV terminal can only be operated through the mobile phone terminal when the mobile phone terminal is bound to the TV terminal.

2. The smart TV monitoring system according to claim 1, wherein a startup password can be set for the TV terminal, and when the startup password is set, the background monitoring service sends a verification code to the mobile phone terminal and the startup password is activated after the verification code is entered on the TV terminal.

3. The smart TV monitoring system according to claim 1, wherein the background monitoring service can record data of applications running in a foreground of the TV terminal, and the data comprises names of the applications and running times of the applications in the foreground.

4. The smart TV monitoring system according to claim 1, wherein the background monitoring service can record duration and a video interface of a video played by the TV terminal through an ATV/DTV/AV/HDMI video interface.

5. The smart TV monitoring system according to claim 1, wherein the TV terminal can take a screenshot, and after taking the screenshot, the TV terminal packages the screenshot into picture data in a bmp/jpeg/png format, and then sends the picture data to the mobile phone terminal through the background monitoring service.

6. The smart TV monitoring system according to claim 1, wherein the TV terminal can record the screen, and the TV terminal packages osd+video data into a TS stream, and directly transmits the TS stream to the mobile phone terminal by communicating with the mobile phone terminal through a UDP protocol.

7. The smart TV monitoring system according to claim 1, wherein the background monitoring service can draw a full-screen warning prompt box in the foreground of the TV terminal according to the network request from the server, and content input by the mobile phone terminal is displayed in the warning prompt box.

8. The smart TV monitoring system according to claim 1, wherein the background monitoring service can restrict startup of a certain application in the TV terminal according to the network request from the server.

9. The smart TV monitoring system according to claim 1, wherein the background monitoring service can draw a locking box in the foreground of the TV terminal according to the network request from the server and send an unlocking password to the mobile phone terminal, so that the background monitoring service intercepts all button actions except for a power button on the TV terminal before the unlocking password is entered correctly.

10. The smart TV monitoring system according to claim 1, wherein the background monitoring service can directly shut down the TV terminal or set a shutdown timer according to the network request from the server, and the TV terminal is shut down when the shutdown timer counts to a preset value.
